# EUROPÄISCHE PATENTANMELDUNG

(11) **EP 1 428 701 A2**
(43) Veröffentlichungstag der Anmeldung: **16.06.2004**
(21) Anmeldenummer: 03026480.8
(22) Anmeldetag: 20.11.2003
(51) Int. Cl.: B60H 1/00, B60H 1/34

(54) **Luftausströmvorrichtung und Verfahren zu deren Herstellung**

(30) Priorität: 10.12.2002 DE 10257754
(71) Anmelder: REUM GmbH & Co. Betriebs KG, 74736 Hardheim (DE)
(72) Erfinder: Langer, Franz, 55276 Oppenheim (DE); Schermuly, Werner, 35794 Mengerskirchen (DE)
(74) Vertreter: Maser, Jochen, Dipl.-Ing.

(57) **Zusammenfassung**

Die Erfindung betrifft eine Luftausströmvorrichtung, sowie ein Verfahren zu deren Herstellung, welche zur Schallabsorption in zumindest einem Wandabschnitt (38, 39, 41, 42) eines Gehäuses (26) zumindest eine Ausnehmung (47) aufweist, die durch schwingungsabsorbierendes Material (51) verschlossen ist.

## Beschreibung

Die Erfindung betrifft eine Luftausströmvorrichtung und ein Verfahren zu deren Herstellung, welche ein Gehäuse zum Einleiten von Luft in einen Raum, vorzugsweise in einen Innenraum eines Fahrzeuges, aufweist.

In einem Fahrzeug ist unterhalb der Frontscheibe ein Instrumententafelbauteil vorgesehen, welches zur Aufnahme von Instrumenten, Anzeigeeinheiten für die Geschwindigkeit, Drehzahl, Temperatur, Uhrzeit und weitere Informationen vorgesehen ist. Dieses Instrumententafelbauteil weist des weiteren Austrittsbereiche zur Belüftung des Innenraums auf. Diese Austrittsbereiche sind einem Luftverteilsystem zum Zuführen der Luft zugeordnet. Durch eine Steuereinrichtung werden die Menge und die Temperatur der zugeführten Luft geregelt. Im Austrittsbereich von Luftaustrittsdüsen sind Luftleitvorrichtungen vorgesehen, durch welche eine individuelle Einstellung der Luftstrommenge und der Luftausströmrichtung ermöglicht ist. Diese Luftleitvorrichtungen können als manuell oder elektrisch ausgebildete Lamellen, Klappen oder Walzen einzeln oder in Gruppen bewegbar ausgebildet sein. Zur Aufnahme der Luftleitvorrichtung oder Luftleitvorrichtungen sind Luftausströmvorrichtungen vorgesehen, welche in einen Luftzuführkanal einsetzbar sind oder Teil eines Luftzuführkanals bilden. Die Gehäuse der Luftausströmvorrichtung sind zumeist kanal-, trichter- oder trompetenförmig ausgestaltet.

Beim Zuführen eines Luftstromes in den Innenraum eines Kraftfahrzeuges, insbesondere bei einer maximalen Fördermenge, werden in Wandabschnitten des Gehäuses oder der Gehäuse Schwingungen erzeugt, wodurch Geräusche entstehen. Durch die Ausgestaltung der Gehäuseform kommt es zu einer Geräuschverstärkung, beispielsweise nach einem Geigenkastenprinzip. Des weiteren können Vibrationen der Luftleitvorrichtungen und Luftabrisse an den Luftleitvorrichtungen zu Geräuschen führen, die wiederum durch das Gehäuse verstärkt werden. Auch durch die Bewegung von Stellelementen ausgelösten Geräusche können verstärkt werden. Derartige Geräusche können sowohl an einer Mitteldüse als auch an Seitendüsen oder weiteren Luftaustritten, welche beispielsweise an dem Instrumententafelbauteil, der Mitteltunnelverkleidung oder der B-Säulenverkleidung vorgesehen sind, auftreten.

Der Erfindung liegt deshalb die Aufgabe zugrunde, eine Luftausströmvorrichtung der eingangs genannten Art sowie ein Verfahren zu deren Herstellung anzugeben, welche zumindest eine geräuschreduzierte Luftzuführung und eine Geräuschminderung der Verstellgeräusche ermöglicht.

Die erfindungsgemäße Luftausströmvorrichtung ist durch die Merkmale des unabhängigen Anspruchs 1 gegeben. Das erfindungsgemäße Verfahren zur Herstellung der Luftausströmvorrichtung ist durch die Merkmale des unabhängigen Anspruchs 15 gegeben. Weitere vorteilhafte Ausgestaltungen und Weiterbildungen sind Gegenstand der abhängigen Ansprüche.

Die erfindungsgemäße Luftausströmvorrichtung zeichnet sich dadurch aus, dass ein Gehäuse der Luftausströmvorrichtung zumindest einen Wandabschnitt aufweist, in dem ein schwingungsabsorbierender Bereich integriert oder vorgesehen ist. Dadurch wird eine Schwingungsanregung des mit zumindest einen schwingungsabsorbierenden Bereichs versehenen Wandabschnittes verringert oder eliminiert, wodurch die Erzeugung von Geräuschen reduziert oder verhindert ist. Die Bildung eines Schallkörpers als auch die Weiterleitung oder Verstärkung von Vibrationen wird dadurch gestört. Die bisherige Geometrie des Gehäuses für die Luftausströmrichtung zum Einbau in das Instrumententafelbauteil als auch in eine Mitteltunnelverkleidung oder eine B-Säulenverkleidung bzw. zur Anordnung in Luftverteilersystemen kann beibehalten werden. Gleichzeitig kann eine biegesteife Ausgestaltung des Gehäuses aufrechterhalten werden. Dadurch können die geforderten Funktionen, wie beispielsweise Aufnahme der Luftleitvorrichtung oder der Luftleitvorrichtungen, mechanische Festigkeit, Stoßunempfindlichkeit sowie Formstäbilität bei unterschiedlichen Temperaturen und Klimawechsel erfüllt werden.

Nach einer vorteilhaften Ausgestaltung der Erfindung ist vorgesehen, dass in dem zumindest einen Wandabschnitt des Gehäuses zumindest eine Ausnehmung vorgesehen ist, in der ein schwingungsabsorbierendes Material integriert ist. Die bewusst in den Wandabschnitt eingebrachte Ausnehmung oder Öffnung wird durch ein schwingungsabsorbierendes Material geschlossen. Durch diese Ausgestaltung wird das einen Schallkörper bildende Gehäuse gestört bzw. unterbrochen, so dass eine Schwingungsanregung verringert oder verhindert ist. Zusätzlich kann durch das Einbringen des schwingungsabsorbierenden Materials in zumindest eine Ausnehmung eine Schwingungsberuhigung oder eine Dämpfung erzielt werden, so dass eine geräuschminimierte Luftzufuhr gegeben ist. Das schwingungsabsorbierende Material verhindert auch eine Geräuschverstärkung und verringert gleichfalls Vibrationen, die durch das Austreten des Luftstromes an Luftleitvorrichtungen und Luftabrissen sowie Verstellgeräuschen entstehen können.

Das schwingungsabsorbierende Material, welches in der zumindest einen Ausnehmung des zumindest einen Wandabschnitts vorgesehen ist, weist vorteilhafterweise im Querschnitt gesehen eine zumindest bereichsweise dem Wandabschnitt entsprechende Wandstärke auf. Insbesondere im Übergangsbereich vom Wandabschnitt zum in der Ausnehmung angeordneten schwingungsabsorbierenden Material ist die zumindest gleiche Wandstärke von Vorteil, damit eine sichere Anordnung des Materials zum Wandabschnitt vorgesehen ist. Des weiteren kann ein großer Übergangsbereich geschaffen werden, um eine hohe Schwingungsabsorption durch das eingebrachte Material zu erzielen. Durch den Übergangsbereich kann zumindest ein wesentlicher Anteil an Schwingungen in dem schwingungsabsorbierenden Material beruhigt werden.

Des weiteren weist diese vorteilhafte Ausgestaltung den Vorteil auf, dass die Gestalt und die Geometrie der Innenwand der Luftausströmvorrichtung beibehalten werden kann. Gleichzeitig kann der freie Querschnitt eines Luftkanals in dem Gehäuse im bisherigen Umfang aufrechterhalten werden.

Zur Außenseite des Gehäuses weist das schwingungsabsorbierende Material in einer bevorzugten Ausführungsform Verstärkungen oder Verdickungen auf, deren Form und Geometrie anwendungsspezifisch an den Einbauraum in dem Instrumententafelbauteil und/oder an die zu dämpfenden Schwingungen im Gehäuse anpassbar sind. Durch die Verstärkungen oder Verdickungen des schwingungsabsorbierenden Materials kann eine größere Masse zur Schwingungsabsorption vorgesehen sein, wodurch eine bessere Dämpfung erzielbar ist.

Zur Reduzierung der Schwingungen kann des weiteren bevorzugt vorgesehen sein, dass zumindest bereichsweise eine geräuschmindernde Oberfläche vorgesehen ist, die zur Innenseite des Luftkanals weist. Durch die Oberflächenstruktur kann eine zusätzliche Verringerung der Vibrationen und somit eine Verringerung der Geräuscherzeugung oder Verstärkung gegeben sein.

Bevorzugt sind Strömungsrippen, Trennwände und/oder eine raue Oberflächenstruktur vorgesehen, die zur Geräuschminderung beitragen. Diese Oberfläche weist in den Innenraum des Luftkanals und ist vorteilhafterweise in Strömungsrichtung ausgerichtet. Die Geometrie der beispielsweise vorgesehenen Strömungsrippen kann gerundet, rechteckig, trapezförmig oder dergleichen ausgebildet sein.

Das schwingungsabsorbierende Material ist bevorzugt strömungsdicht in der zumindest einen Ausnehmung integriert. Dadurch werden strömungsoptimierte Luftwege geschaffen, welche trotz der wieder verschlossenen Ausnehmungen nicht beeinträchtigt sind. Das schwingungsabsorbierende Material ist sowohl für Kalt- als auch Warmluft für eine strömungsdichte Anordnung beständig.

Nach einer weiteren bevorzugten Ausführungsform der Erfindung ist vorgesehen, dass im Übergangsbereich zwischen dem schwingungsabsorbierenden Material und dem an die zumindest eine Ausnehmung angrenzenden Wandabschnitt eine flächenbündige Ausgestaltung vorgesehen ist. Dadurch werden Luftverwirbelungen oder Strömungsabrisse vermieden, wodurch wiederum eine Geräuschminimierung erzielt wird.

In einen Wandabschnitt des Gehäuses sind bevorzugt mehrere Ausführungen durch Stege zueinander getrennt angeordnet. Dadurch wird die Ausbildung eines Schallkörpers verhindert und eine hinreichend steife Ausgestaltung des Wandabschnittes ermöglicht, um ein biegesteifes Gehäuse auszubilden und die Resonanzen zu brechen.

Zur Schwingungsabsorption in den Ausnehmungen wird vorteilhafterweise ein thermoplastisches Elastomer verwendet, welches die Ausnehmungen weich verschließt, so dass homogene Übergänge geschaffen sind, ohne Einfluss auf den Strömungsquerschnitt des Luftstromes zu nehmen.

Es sind thermoplastische verarbeitbare Elastomere und Polyurethanspritzgussmassen bevorzugte Materialien. Auch können Polyamide mit und ohne Glasfasern in Verbindung mit echten Elastomeren auf Silikonbasis vorgesehen sein. Zur Erhöhung der Schwingungsabsorption können Zusätze, wie beispielsweise Blei, Ruß, Fasern oder dergl. zugesetzt werden. Ebenso können chemische oder physikalische Treibmittel zugesetzt werden, um Schaumstrukturen zu erzeugen, die ein Dämpfungspotential aufweisen.

Nach einer vorteilhaften Ausführungsform der Erfindung ist vorgesehen, dass in die zumindest eine Ausnehmung in zumindest einem Wandabschnitt des Gehäuses das schwingungsabsorbierende Material einsetzbar ist. Dadurch können unterschiedliche schwingungsabsorbierende Materialien in Abhängigkeit des Anforderungsprofils ausgewählt und in die Ausnehmungen des Gehäuses eingesetzt oder bei Bedarf ausgetauscht werden. Des weiteren können bei Alterung des schwingungsabsorbierenden Materials ein einfacher Austausch und Erneuerung gegeben sein.

Die in die Ausnehmungen einsetzbaren Abschnitte des schwingungsabsorbierenden Materials sind vorzugsweise lösbar angeordnet. Beispielsweise eine Rast- oder Klipsverbindung ermöglicht eine schnelle Montage und die Auswechselbarkeit. Alternativ können auch nicht lösbare Verbindungen vorgesehen sein, beispielsweise können die schwingungsabsorbierenden Materialien mittels eines Klebemittels oder unter Einwirkung von Wärme durch eine Klebe- oder Schweißverbindung in der Ausnehmung fixiert sein.

Eine bevorzugte Ausgestaltung der Erfindung zeichnet sich dadurch aus, dass das Gehäuse und das in der zumindest einen Ausnehmung des zumindest einen Wandabschnitts integrierten schwingungsabsorbierende Material als Mehrkomponenten-Spritzgussteil hergestellt ist. Dadurch kann eine kostengünstige Massenproduktion gegeben sein. Durch einen wenigstens zweistufigen Herstellungsprozess können werkzeugfallende Luftausströmvorrichtungen herstellbar sein, welche ein schallabsorbierendes Gehäuse aufweisen, das darüber hinaus dicht ausgebildet ist und eine hinreichende Steifigkeit aufweist. Dieser zweistufige Herstellungsprozess kann auch mit zwei Werkzeugformen durchgeführt werden, die getrennt in zwei hintereinander geschalteten Maschinen angeordnet sind.

Um geringe Werkzeugkosten bei der Herstellung eines Mehrkomponentenspritzgussteils zu erzielen, sind an einer Außenseite des Gehäuses von zumindest zwei Ausnehmungen Verbindungsabschnitte vorgesehen, welche aus einem schwingungsabsorbierenden Material bestehen. Dadurch ist ermöglicht, dass beispielsweise ein oder mehrere Anspritzpunkte gegeben sind und das schwingungsabsorbierende Material sich gleichmäßig in mehreren Ausnehmungen verteilt und kurze Strömungswege vorgesehen sind.

Durch das erfindungsgemäße Verfahren zur Herstellung einer Luftausströmvorrichtung wird erzielt, dass durch zwei Verfahrensabschnitte eine vibrationsarme und zumindest geräuschminimierte Luftausströmvorrichtung hergestellt wird. Das Gehäuse der Luftausströmvorrichtung wird in einem ersten Verarbeitungsabschnitt als Kunststoff-Spritzgussteil hergestellt, wobei bei dieser Herstellung gleichzeitig die zumindest eine Ausnehmung in zumindest einen Wandabschnitt des Gehäuses eingebracht wird. In dem zweiten Verfahrensabschnitt wird die zumindest eine Ausnehmung geschlossen. Dadurch wird die trichter-, trompetenförmige Ausgestaltung eines Schallkörpers gestört.

Nach einer bevorzugten Ausführungsform des Verfahrens ist vorgesehen, dass das schwingungsabsorbierende Material in dem weiteren Verfahrensabschnitt in die zumindest eine Ausnehmung eingespritzt wird. Bevorzugt ist ein Zweikomponentenwerkzeug mit zwei Stationen vorgesehen. In der ersten Station wird das Gehäuse als Vorspritzling mit der zumindest einen Ausnehmung in den zumindest einen Wandabschnitt gespritzt. In der zweiten Station wird das thermoplastische Elastomer als schwingungsabsorbierendes Material in die zumindest eine Ausnehmung des Vorspritzlings eingespritzt, der zuvor in der ersten Station hergestellt wurde. Somit kann in einem Werkzeug mit zwei Arbeitsschritten die erfindungsgemäße Luftausströmvorrichtung als Endprodukt fertiggespritzt werden.

Nach einer weiteren vorteilhaften Ausgestaltung der Erfindung ist vorgesehen, dass das schwingungsabsorbierende Material mit Haftvermittler eingebracht wird. Dadurch kann eine Klebewirkung mit dem Material des Vorspritzlings gegeben sein, wodurch eine schnellere und sichere Anordnung des schwingungsabsorbierenden Materials in der zumindest einen Ausnehmung zum angrenzenden Wandabschnitt des Gehäuses gegeben ist. Bei einer Materialauswahl, wie beispielsweise Polypropylen für das Gehäuse und einem thermoplastischen Elastomer auf einer Polypropylen-Basis kann ein Verschweißen der beiden Materialien gegeben sein.

Alternativ ist vorgesehen, dass ein vorgefertigter Abschnitt des schwingungsabsorbierenden Materials in die zumindest eine Ausnehmung des Gehäuses eingesetzt wird. Bevorzugt wird dies noch vor einem vollständigem Abkühlen des Vorspritzlings durchgeführt, so dass eine dichte Verbindung zwischen dem schwingungsabsorbierenden Material und der zumindest einen Ausnehmung des Gehäuses gegeben ist.

Die Erfindung sowie weitere vorteilhafte Ausführungsformen und Weiterbildungen derselben werden im folgenden anhand dem in der Zeichnung dargestellten Beispiel näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Figur 1: einen schematischen Schnitt durch eine Belüftungsvorrichtung mit einem Instrumententafelbauteil,
- Figur 2: eine schematische perspektivische Darstellung der Belüftungsvorrichtung gemäß Figur 1,
- Figur 3: eine perspektivische Darstellung von oben auf eine Luftausströmvorrichtung,
- Figur 4: eine perspektivische Ansicht von unten auf eine Luftausströmvorrichtung gemäß Figur 3,
- Figur 5: eine schematische Schnittdarstellung entlang der Linie V - V in Figur 3 und

- Figur 6: eine schematische Schnittdarstellung entlang der Linie VI - VI in Figur 3.

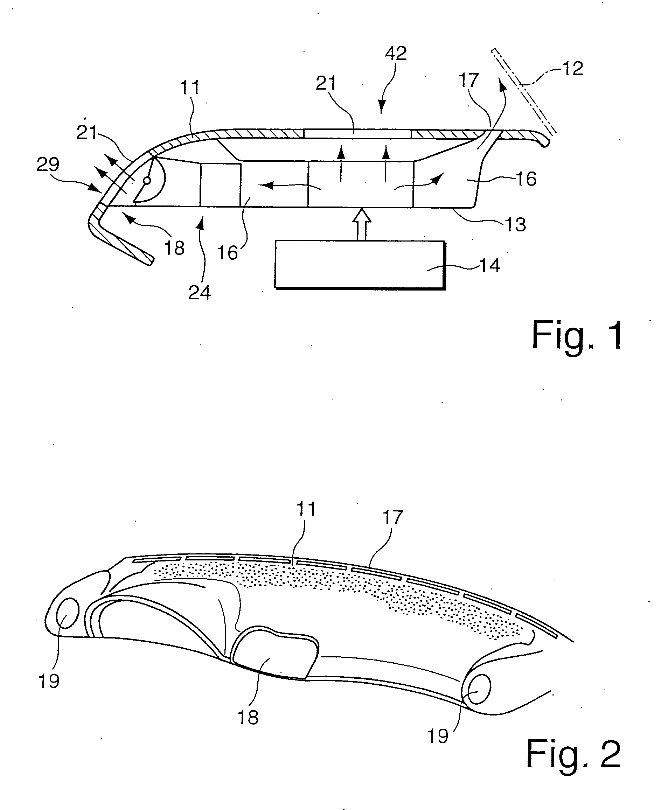

In den Figuren 1 und 2 ist ein Instrumententafelbauteil 11 in bekannter Art und Weise dargestellt. Das Instrumentenbauteil 11 erstreckt sich hierbei unterhalb einer Winterschutzscheibe 12 eines Fahrzeuges über die gesamte Breite des Innenraums des Fahrzeugs. Unterhalb des Instrumententafelbauteils 11 ist ein Luftverteilsystem 13 vorgesehen, welches von einer Steuereinrichtung 14 angesteuert ist. Über Kanäle 16 des Luftverteilsystems 13 wird einer Defrosterdüse 17 strömungsförmig gerichtete Luft zugeführt. Des weiteren wird über einen weiteren Kanal 16 einer Mitteldüse 18 strömungsförmig gerichtete Luft zugeführt. Darüber hinaus ist auf beiden Seiten des Instrumententafelbauteils 11 jeweils ein weiterer düsenförmiger Austrittsbereich als Seitendüse 19 vorhanden, über den der Innenraum mit strömungsgerichteter Luft versorgt werden kann. Die Steuerung der Luftmenge und der Lufttemperatur übernimmt die Steuereinrichtung 14.

Die Mitteldüse oder Mitteldüsen 18 als auch die Seitendüsen 19 weisen in der Fläche unterschiedlich große Austrittsbereiche 29 auf, in denen Luftleitvorrichtungen 21, welche aus Klappen oder Lamellen oder dergleichen bestehen können und im Detail nicht näher dargestellt sind, eingesetzt und zum Instrumententafelbauteil 11 angeordnet sind.

Dem Austrittbereich 29 ist eine Luftausströmvorrichtung 24 zugeordnet. Diese Luftströmvorrichtung 24 kann an einen Kanal 16 angrenzen oder darin zumindest teilweise eingesetzt werden. Diese Luftausströmvorrichtung 24 ist sowohl für eine oder mehrere Mitteldüsen 18 als auch Seitendüsen 19 oder Defrosterdüsen 17 vorgesehen.

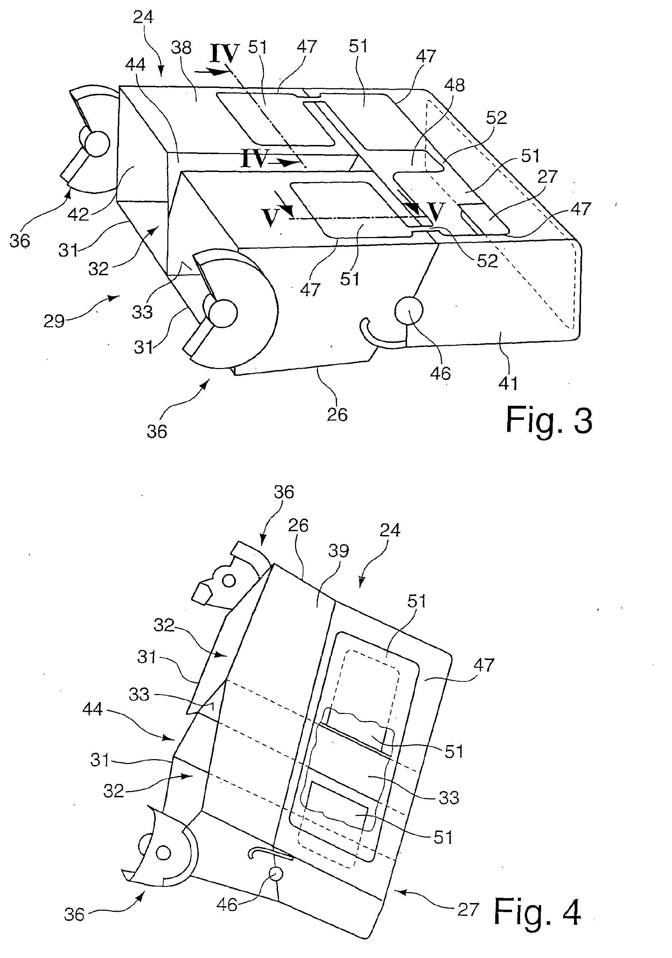

Die Luftausströmvorrichtung 24 wird anhand der Figuren 3 und 4 näher beschrieben. Die Figur 3 zeigt eine perspektivische Aussicht von oben und die Figur 4 eine perspektivische Aussicht von unten auf die Luftausströmvorrichtung 24.

Diese Luftausströmvorrichtung 24 weist ein Gehäuse 26 auf, welches eine erste dem Luftzuführkanal 16 zugeordnete Öffnung 27 und eine einem Austrittsbereich 29 zugeordnete Öffnung 31 umfasst. Dazwischen liegend ist ein Luftkanal 32 gebildet, der durch eine Trennwand 33 in zwei Kanalsegmente getrennt ist. Diese Trennwand 33 teilt beispielsweise den Luftaustrittsbereich in einen linken und rechten Bereich. An Aufnahmen 36 sind Luftleitvorrichtungen 21 befestigbar, durch die der rechte und linke Bereich des Luftkanals 32 getrennt einstellbar sind. Die Trennwand 33, welche auch mehrfach in dem Luftkanal 32 vorgesehen sein kann, ist gemäß dem Ausführungsbeispiel mittig vorgesehen und bildet gleichzeitig eine Versteifung für einen oberen und unteren Wandabschnitt 38, 39 des Gehäuses 26. Der Luftkanal 32 ist durch die seitlichen Wandabschnitte 41, 42 begrenzt, welche jeweils in den oberen und unteren Wandabschnitt 38, 39 übergehen. Bevorzugt weist die Trennwand 33 im Austrittsbereich 29 eine V-förmige Ausgestaltung 44 auf. Diese dient als Montagehilfe für den Einbau in der Mitteldüse 18 und steift den rechten und linken Bereich des Luftkanals 32 aus.

In den seitlichen Wandabschnitten 41, 42 sind Bohrungen 46 vorgesehen, welche zur Aufnahme einer Klappe vorgesehen sind, um die Öffnung 27 des Gehäuses 26 vollständig zu verschließen. Diese Klappe ist durch nicht näher dargestellte Aufnahmen strömungsdicht in den Bohrungen 46 angeordnet.

Zur Vermeidung von Schwingungen ist in zumindest einem Wandabschnitt 38, 39, 41, 42 zumindest eine Ausnehmung 47 vorgesehen. Beispielsweise erstreckt sich die Ausnehmung 47 im unteren Wandabschnitt 39 fast vollständig über die gesamte Breite. Ein oberer Wandabschnitt 38 weist beispielsweise vier Ausnehmungen 47 auf, die gleichmäßig verteilt einander zugeordnet sind. Zwischen den in dem oberen Wandabschnitt 38 angeordneten Ausnehmungen 47 sind Stege 48 ausgebildet, welche zur Versteifung des Wandabschnitts 38 beitragen.

Die Anzahl und Geometrie der Ausnehmungen 47 ist beliebig. Beispielsweise können dreieckförmige Ausnehmungen vorgesehen sein, welche jeweils um 180 Grad abwechselnd zueinander angeordnet und aufgereiht sind. Ebenso können länglich schmale Schlitze als Ausnehmungen als auch kreisförmige, ovale oder sonst geometrisch unregelmäßig ausgebildete Ausnehmungen 47 vorgesehen sein. Die Anzahl, Form und Größe der zumindest einen Ausnehmung 47 ist an den jeweiligen Wandabschnitt 38,39, 41, 42 des Gehäuses 26 anpassbar. Bevorzugt werden die Ausnehmungen 47 an ebenen Wandabschnitten 38, 39, 41 und 42 vorgesehen.

Das Gehäuse 26 wird als Vorspritzling eines Mehrkomponenten-Formteils hergestellt. Beispielsweise werden thermoplastische oder duroplastische Materialien oder Materialmischungen verwendet. Geeignete thermoplastische Materialien sind beispielsweise ABS, PC-ABS, PC, PC-Blend, PP, PP mit Verstärkungsmaterialien, PPE. Diese Materialien können verstärkt, mit Zusätzen und / oder Treibmittel versehen sein. Das Gehäuse 26 als Vorspritzling weist Ausnehmungen 47 auf, welche in einem zweiten Verfahrensabschnitt durch ein schwingungsabsorbierendes Material 51 geschlossen werden. In einer zweiten Station des Mehrkomponenten-Werkzeuges wird das schwingungsabsorbierende Material eingebracht. Bevorzugt wird ein thermoplastischer Elastomer als schwingungsabsorbierendes Material 51 verwendet, wodurch eine bevorzugte Verbindung zwischen der Ausnehmung 47 und dem Material 51 gegeben ist. Zwischen dem jeweils in der Ausnehmung 47 angeordneten schwingungsabsorbierenden Material 51 sind Verbindungen 52 vorgesehen. Durch diese Verbindungsstellen ist ermöglicht, dass beispielsweise ein Anspritzpunkt genügt, um sämtliche Ausnehmungen 47 mit dem thermoplastischen Elastomer zu versorgen und zu schließen.

Das schwingungsabsorbierende Material 51, welches zur Geräuschminimierung als auch Vibrationsminimierung oder deren Eliminierung beiträgt, wird bevorzugt bei noch nicht vollständig abgekühltem Vorspritzling eingebracht, um eine gute Klebewirkung und Verbindung zu erzielen. Das in der Ausnehmung 47 angeordnete schwingungsabsorbierende Material 51 ist beispielsweise in der Wandstärke an die angrenzenden Wandabschnitte angepasst und kann eine gleichmäßige Dicke aufweisen.

Alternativ zur Ausgestaltung der erfindungsgemäßen Luftausströmvorrichtung 24 als Mehrkomponenten-Formteil, welches in einem zumindest zwei Stationen umfassenden Werkzeug hergestellt wird, ist ermöglicht, dass nach dem Spritzgießen des Gehäuses 26 schwingungsabsorbierende Materialien manuell in die zumindest eine Ausnehmung 47 des zumindest einen Wandabschnitts 38, 39, 41, 42 einsetzbar sind. Hierfür können unterschiedliche Befestigungselemente vorgesehen sein, durch welche das schwingungsabsorbierende Material lösbar oder unlösbar zu den Ausnehmungen fixiert wird. Ebenso kann eine Klebeverbindung oder Schweißverbindung vorgesehen sein. Beispielsweise kann das schwingungsabsorbierende Material an umlaufenden Stufen einen Falz aufweisen, wodurch ein Teil des schwingungsabsorbierenden Materials in die Öffnung eingreift und bündig zur Innenseite anliegt und eine umlaufende Schulter an der Außenseite angreift und durch eine Klebeverbindung fixierbar ist.

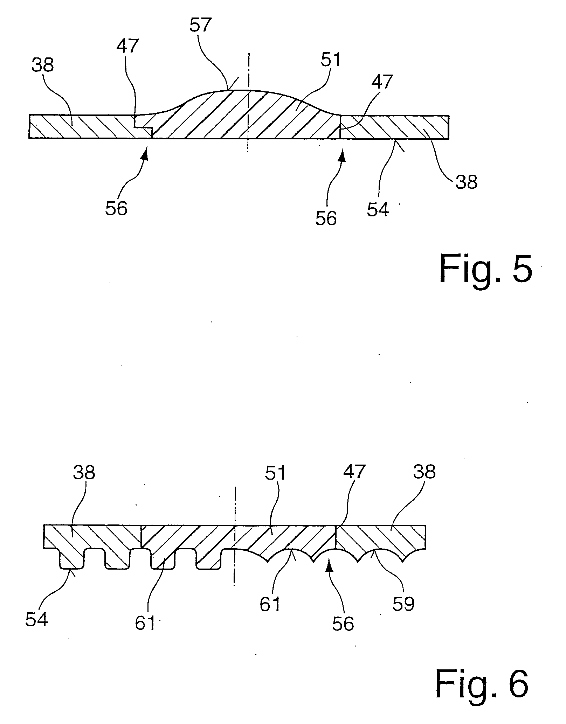

In Figur 5 ist schematisch ein linker und rechter Teilschnitt entlang der Linie V -V in Figur 3 dargestellt. In dem Wandabschnitt 38 ist die Ausnehmung 47 vorgesehen, die durch das schwingungsabsorbierende Material 51 geschlossen ist. Bevorzugt ist das schwingungsabsorbierende Material 51 bündig zu einer Innenwand 54 des Luftkanals 32 angeordnet. Dadurch wird ein strömungsgünstiger Übergang ohne Strömungsabrisse gebildet, um Turbulenzen zu verhindern. Im Übergangsbereich 56 entspricht der Querschnitt des schwingungsabsorbierenden Materials 51 der Dicke der Wandstärke im Bereich des Wandabschnitts 38. Dadurch kann eine große Übergangsfläche geschaffen werden, wodurch eine gute Überleitung der Vibration aus dem Wandabschnitt 38 in das schwingungsabsorbierende Material 51 gegeben ist. Im mittleren Bereich der Ausnehmung 47 ist beispielsweise eine Verdickung 57 dargestellt. Dadurch kann eine größere Masse ausgebildet sein, wodurch eine verbesserte Dämpfung erzielt wird. Diese Verdickung oder Verstärkung 57 kann geometrisch vielfältig ausgebildet sein, wobei bevorzugt geometrische Formen verwendet werden, die bei der Herstellung in einem Mehrkomponentenwerkzeug leicht entformbar sind. Die Verdickungen oder Erhöhungen als auch Verstärkungen 57 können sich teilweise oder vollständig entlang den Ausnehmungen erstrecken. Ebenso können auch bereichsweise eine oder mehrere Verstärkungen oder Verdickungen 57 ausgebildet sein.

In Figur 5 ist des weiteren ein Übergangsbereich 56 dargestellt, der als Stufe ausgebildet ist. Dadurch kann beispielsweise eine sichere Fixierung des schwingungsabsorbierenden Materials 51 in der Ausnehmung 47 gegeben sein. Zusätzlich kann auch eine Überlappung im Außenbereich des angrenzenden Wandabschnittes 38 gegeben sein.

Das schwingungsabsorbierende Material 51 kann auch alternativ in einem an den Übergangsbereich 56 angrenzenden Bereich verjüngt ausgebildet sein. Sowohl eine Verdickung als auch eine Verjüngung ermöglicht ein membranartiges Arbeiten und Brechen von Resonanzen, welche gegebenenfalls bei der Luftführung entstehen können. In einer einfachen Ausführungsform ist ein konstanter Querschnitt vorgesehen.

In Figur 6 ist ein Schnitt entlang der Linie VI - VI in Figur 3 näher dargestellt. Im rechten Halbschnitt ist eine erste Ausführungsform von einer geräuschmindernden Oberfläche 59 an der Innenwand 54 des Luftkanals 52 dargestellt. In dieser Ausführungsform ist die Oberfläche durch wellenförmige Rippen 61 dargestellt, welche längs des Strömungsweges verlaufen. In dem linken Halbschnitt sind die Rippen 61 rechteckförmig ausgebildet. Weitere Alternativen, welche wiederum eine einfache Entformung ermöglichen, sind ebenfalls denkbar.

Die geräuschmindernde Oberfläche 59 kann des weiteren durch eine raue Oberflächenstruktur ausgebildet sein. Diese Oberflächenstruktur kann zusätzlich an den Rippen 61 oder dergleichen vorgesehen sein.

Es versteht sich, dass die in den Figuren 5 und 6 ausgebildeten Halbschnitte beliebig miteinander kombiniert oder durch weitere Ausgestaltungen ergänzt werden können. Ebenso ist die Anzahl, die Form und Größe der Ausnehmungen sowie das in der Ausnehmung schwingungsabsorbierende Material in einer beliebigen Kombination der vorgenannten Merkmale verwendbar.

Sämtliche Ausführungsformen und Variationsmöglichkeiten haben gemeinsam das Ziel, dass durch die Einbringung von zumindest einer Ausnehmung 47 in zumindest einen Wandabschnitt 38, 39, 41, 42, welche durch ein schwingungsabsorbierendes Material 51 geschlossen ist, zumindest eine Schallabsorption und Verringerung der Vibration in dem Gehäuse 26 ermöglicht ist. Zusätzlich können Veränderungen der Gehäusegeometrie 26 aufgrund von unterschiedlichen Temperatureinwirkungen durch die Ausnehmungen 47, insbesondere deren verändertes Schwingungsverhalten, kompensiert werden.

Die erfindungsgemäße Ausgestaltung von schwingungsabsorbierendem Material in oder an zumindest einer Ausnehmung des zumindest einen Wandabschnitts in einem Gehäuse ist auf die Luftausströmvorrichtung nicht begrenzt, sondern auch für weitere in einem Luftverteilsystem vorgesehene Luftführungskomponenten möglich.

## Patentansprüche

1. Luftausströmvorrichtung zum Zuführen von Luft in einen Raum, insbesondere einen Innenraum eines Fahrzeugs, mit einem Gehäuse (26), welches zumindest eine Öffnung (27) aufweist, die mit einem Luftverteilsystem (13) kommuniziert und mit zumindest einer weiteren Öffnung (31), welche zum Austrittsbereich (29) gerichtet ist, **dadurch gekennzeichnet, dass** das Gehäuse (26) zumindest einen Wandabschnitt (38, 39, 41, 42) aufweist, in dem ein schwingungsabsorbierender Bereich integriert ist.

2. Luftausströmvorrichtung nach Anspruch 1, **dadurch gekennzeichnet, dass** in dem zumindest einen Wandabschnitt (38, 39, 41, 42) des Gehäuses (26) zumindest eine Ausnehmung (47) vorgesehen ist, in der ein schwingungsabsorbierendes Material (51) integriert ist.

3. Luftausströmvorrichtung nach Anspruch 1 oder 2, **dadurch gekennzeichnet, dass** das in der zumindest einen Ausnehmung (47) integrierte schwingungsabsorbierende Material (51) im Querschnitt zumindest bereichsweise dem eines daran angrenzenden Wandabschnitts (38, 39, 41, 42) entspricht.

4. Luftausströmvorrichtung nach einem der vorhergehenden Ansprüche, **dadurch gekennzeichnet, dass** das schwingungsabsorbierende Material (51) zur Außenseite des Gehäuses (26) ausgebildete Verstärkungen oder Verdickungen (57) aufweist.

5. Luftausströmvorrichtung nach einem der vorhergehenden Ansprüche, **dadurch gekennzeichnet, dass** das in der zumindest einen Ausnehmung (47) angeordnete schwingungsabsorbierende Material (51) zumindest bereichsweise eine geräuschmindernde Oberfläche (59) aufweist, die zur Innenseite des Luftkanals (32) weist.

6. Luftausströmvorrichtung nach Anspruch 4, **dadurch gekennzeichnet, dass** die geräuschmindernde Oberfläche (59) durch Strömungsrippen (61), Trennwände und/oder einer rauen Oberflächenstruktur ausgebildet ist.

7. Luftausströmvorrichtung nach einem der vorhergehenden Ansprüche, **dadurch gekennzeichnet, dass** das schwingungsabsorbierende Material (51) in der zumindest einen Ausnehmung (47) des zumindest einen Wandabschnitts (38, 39, 41, 42) strömungsdicht integriert ist.

8. Luftausströmvorrichtung nach einem der vorhergehenden Ansprüche, **dadurch gekennzeichnet, dass** in der zumindest einen Ausnehmung (47) des zumindest einen Wandabschnitts (38, 39, 41, 42) integriertes schwingungsabsorbierende Material (51) im Übergangsbereich zum Wandabschnitt ( 38, 39, 41, 42) zumindest an der Innenseite eines Luftkanals (32) des Gehäuses (26) flächenbündig ausgebildet ist.

9. Luftausströmvorrichtung nach einem der vorhergehenden Ansprüche, **dadurch gekennzeichnet, dass** in einem Wandabschnitt (38, 39, 41, 42) des Gehäuses (26) mehrere Ausnehmungen (47) vorgesehen sind, welche durch Stege (48) getrennt sind.

10. Luftausströmvorrichtung nach einem der vorhergehenden Ansprüche, **dadurch gekennzeichnet, dass** das schwingungsabsorbierende Material (51) aus thermoplastischem Elastomer ausgebildet ist.

11. Luftausströmvorrichtung nach einem der vorhergehenden Ansprüche, **dadurch gekennzeichnet, dass** ein in der Geometrie an die zumindest eine Ausnehmung (47) angepasster Abschnitt des schwingungsabsorbierenden Materials (51) vorgesehen ist, der in zumindest eine Ausnehmung (47) einsetzbar ist.

12. Luftausströmvorrichtung nach Anspruch 11, **dadurch gekennzeichnet, dass** der Abschnitt des schwingungsabsorbierenden Materials (51) durch eine lösbare oder unlösbare Verbindung in der Aufnahme (47) angeordnet ist.

13. Luftausströmvorrichtung nach einem der Ansprüche 1 bis 10, **dadurch gekennzeichnet, dass** das Gehäuse (26) und das in der zumindest einen Ausnehmung (47) des zumindest einen Wandabschnitts (38, 39, 41, 42) integrierten schwingungsabsorbierenden Materials (51) als Mehrkomponenten-Spritzgussteil hergestellt ist.

14. Luftausströmvorrichtung nach Anspruch 13, **dadurch gekennzeichnet, dass** die in zumindest zwei Ausnehmungen (47) integrierten schwingungsabsorbierenden Materialien (51) Verbindungsabschnitte (52) aufweisen.

15. Verfahren zur Herstellung einer Luftausströmvorrichtung nach einem der Ansprüche 1 bis 14, welche zum Zuführen der Luft in einen Raum, insbesondere einen Innenraum eines Fahrzeuges, vorgesehen ist, mit einem Gehäuse (26), mit zumindest einer ersten Öffnung (27), die mit einem Luftverteilsystem (13) kommuniziert und mit zumindest einer weiteren Öffnung (31), welche zum Austrittsbereich (29) gerichtet ist, bei dem in einem ersten Verfahrensabschnitt das Gehäuse (26) mit zumindest einer Ausnehmung (47) in zumindest einen Wandabschnitt (38, 39, 41, 42) aus einer ersten Materialkomponente gespritzt wird und bei dem in zumindest einem weiteren Verfahrensabschnitt ein schwingungsabsorbierender Bereich aus einer zweiten Materialkomponente in die zumindest eine Ausnehmung (47) integriert wird.

16. Verfahren nach Anspruch 15, **dadurch gekennzeichnet, dass** das schwingungsabsorbierende Material (51) mit Haftvermittler eingebracht wird.

17. Verfahren nach Anspruch 15 oder 16, **dadurch gekennzeichnet, dass** in dem weiteren Verfahrensabschnitt als schwingungsabsorbierendes Material (51) ein thermoplastisches Elastomer in die zumindest eine Ausnehmung (47) eingespritzt wird.

18. Verfahren nach einem der Ansprüche 15 bis 17, **dadurch gekennzeichnet, dass** der erste und zumindest weitere Verfahrensabschnitt in einem Mehrkomponenten-Spritzgusswerkzeug durchgeführt wird.

19. Verfahren nach Anspruch 15, **dadurch gekennzeichnet, dass** in die zumindest eine Ausnehmung (47) ein der Kontur der zumindest einen Ausnehmung (47) entsprechendes schwingungsabsorbierendes Material (51) manuell eingesetzt wird.
